(19) Europäisches Patentamt
European Patent Office
Office européen des brevets

(11) Veröffentlichungsnummer: **0 178 564**
**B1**

# (12) EUROPÄISCHE PATENTSCHRIFT

(45) Veröffentlichungstag der Patentschrift: **05.08.87**

(21) Anmeldenummer: **85112682.1**

(22) Anmeldetag: **07.10.85**

(51) Int. Cl.⁴: **C 08 K 3/32**, C 08 K 9/10, C 08 L 75/04, C 08 J 9/00, C 09 K 21/04

## (54) Hydrolysestabiles Flammschutzmittel auf der Basis von Ammoniumpolyphosphat.

(30) Priorität: **18.10.84 DE 3438095**
**05.08.85 DE 3528034**

(43) Veröffentlichungstag der Anmeldung: **23.04.86 Patentblatt 86/17**

(45) Bekanntmachung des Hinweises auf die Patenterteilung: **05.08.87 Patentblatt 87/32**

(84) Benannte Vertragsstaaten: **DE FR GB IT NL SE**

(56) Entgegenhaltungen:
**DE - A - 2 949 537**
**DE - A - 3 217 816**

(73) Patentinhaber: **HOECHST AKTIENGESELLSCHAFT, Postfach 80 03 20, D-6230 Frankfurt am Main 80 (DE)**

(72) Erfinder: **Staendeke, Horst, Dr., Alte Honrather Strasse 22, D-5204 Lohmar (DE)**
Erfinder: **Michels, Eduard, Dr., Neue Bohle 66, D-5040 Brühl (DE)**

**EP 0 178 564 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung ist ein hydrolysestabiles, mikroverkapseltes Flammschutzmittel auf der Basis von freifliessendem, pulverförmigem Ammoniumpolyphosphat und ein Verfahren zu seiner Herstellung.

Es ist generell bekannt, Ammoniumpolyphosphate als Flammschutzmittel für Kunststoffe zu verwenden. Beispielsweise beschreibt die Deutsche Auslegeschrift 1283532 ein Verfahren zur Herstellung von flammwidrigen Polyurethanen aus hochmolekularen Polyhydroxylvebindungen, Polyisocyanaten und Katalysatoren, wobei ein Ammoniumpolyphosphat der allgemeinen Formel

$$H_{(n-m)+2}(NH_4)_mP_nO_{3n+1}$$

in der n einze ganze Zahl mit einem über 10 liegenden Durchschnittswert ist, m eine ganze Zahl bis maximal n+2 bedeutet und m/n zwischen etwa 0,7 und 1,1 liegt, als Flammschutzmittelzusatz vorgeschlagen wird.

Obgleich Ammoniumpolyphosphate der vorgenannten allgemeinen Formel beim Einsatz in Polyurethanen letzteren einen guten Flammschutz verleihen, sind sie mit dem Nachteil behaftet, dass sie nicht ausreichend wasserunlöslich sind und deshalb im Laufe der Zeit durch Witterungseinflüsse aus dem Kunststoff ausgewaschen werden. Wie aus Spalte 3 der DE-AS 1283532 ersichtlich, besitzen die dort als praktisch wasserunlöslich bezeichneten Ammoniumpolyphosphate dennoch eine beachtliche Löslichkeit in Wasser, indem beim Aufschlämmen von 10 g des Ammoniumpolyphosphates in 100 ml Wasser bei 25° C bis zu 5 g des Ammoniumpolyphosphates gelöst werden, d.h. dass die löslichen Anteile des Ammoniumpolyphosphates bis zu 50% der eingesetzten Menge betragen.

In den deutschen Offenlegungsschriften DE-OS 2949537 und DE-OS 3005252 werden Verfahren zur Herstellung von hydrolysestabilen, pulverförmigen Ammoniumpolyphosphaten durch Umhüllung mit Melamin/Formaldehyd-Harzen bzw. Phenol/Formaldehyd-Harzen beschrieben. In beiden Fällen wird durch diese Massnahme die wasserlöslichkeit im Vergleich zu unbeschichtetem Ammoniumpolyphosphat deutlich verringert.

Nachteilig bei der Verwendung als Flammschutzmittel ist jedoch, dass das Beschichtungsmaterial geringe Mengen an Formaldehyd freisetzt.

Schliesslich wird in der DE-OS 3217816 die Herstellung von hydrolysestabilen, pulverförmigen Ammoniumpolyphosphaten durch Umhüllung mit gehärteten Epoxidharzen beschrieben. Allerdings ist der angestrebte Effekt der Verringerung der wasserlöslichen Anteile weniger ausgeprägt als bei den Melamin/Formaldehyd-Harzen.

Es bestand somit die Aufgabe, Mittel und Wege zur Verminderung der Löslichkeit von Ammoniumpolyphosphaten in Wasser zu finden, so dass die Gefahr des Auswaschens des Ammoniumpolyphosphates beim Einsatz als Flammschutzmittel in Kunststoffen sowie in Holz- oder Papierwerkstoffen durch Witterungseinflüsse möglichst weitgehend vermieden wird. Ferner soll sichergestellt sein, dass das Beschichtungsmaterial keine Schadstoffe freisetzt.

Es hat sich nunmehr gezeigt und war nicht vorhersehbar, dass der erfindungsgemässe Ersatz von Melamin- bzw. Phenolharzen durch Polyisocyanurate mit Vorteilen verbunden ist.

Somit betrifft die Erfindung ein Flammschutzmittel auf der Basis von freifliessendem, pulverförmigem Ammoniumpolyphosphat der allgemeinen Formel

$$H_{(n-m)+2}(NH_4)_mP_nO_{3n+1}$$

in welcher n eine ganze Zahl mit einem Durchschnittswert von etwa 20 bis 800 bedeutet und das Verhältnis von m zu n etwa 1 beträgt, welches dadurch gekennzeichnet ist, dass es aus

a) etwa 75 bis 99,5 Masse% Ammoniumpolyphosphat und
b) etwa 0,5 bis 25 Masse% eines Reaktionsproduktes aus einem Polyisocyanat und einem Trimerisierungskatalysator, wobei das Polyisocyanurat die einzelnen Ammoniumpolyphosphatteilchen umhüllt,

besteht. Das Ergebnis dieser Erfindung ist ein hydrolysestabiles, mikroverkapseltes Flammschutzmittel.

Das Mittel der Erfindung besitzt im allgemeinen eine mittlere Teilchengrösse von etwa 0,01bis 0,1 mm und der Kondensationsgrad n des Ammoniumpolyphosphates ist vorzugsweise eine ganze Zahl mit einem Durchschnittswert von 450 bis 800, bestimmt nach dem Endgruppen-Titrations-Vefahren von „van Wazer, Griffiter und McCullough", Anal. Chem. 26, Seite 1755 (1954).

Entsprechend einer weiteren bevorzugten Ausführungsform des erfindungsgemässen Mittels beträgt der Anteil des Polyisocyanurats 2 bis etwa 15 Masse%.

Das Polyisocyanurat ist ein Reaktionsprodukt, welches durch eine katalytische Trimerisation eines Polyisocyanates entsteht. Der Begriff „Polyisocyanat" umfasst alle handelsüblichen aromatischen und aliphatischen Di- und Polyisocyanate, wie sie z.B. für die Herstellung von Polyurethan-, Polyisocyanurat- oder Polycarbodiimidschäumen Verwendung finden.

Das erfindungsgemässe Verfahren zur Herstellung dieses hydrolysestabilen, mikroverkapselten Flammschutzmittels ist dadurch gekennzeichnet, dass man eine Suspension, welche aus einem Verdünnungsmittel und aus freifliessendem, pulverförmigem Ammoniumpolyphosphat der allgemeinen Formel

$$H_{(n-m)+2}(NH_4)_mP_nO_{3n+1}$$

in welcher n eine ganze Zahl mit einem Durchschnittswert von etwa 20 bis 800 bedeutet und das Verhältnis von m zu n etwa 1 beträgt, sowie aus einem Polyisocyanat und aus einem Trimerisierungskatalysator besteht, während 0,5 bis 5 Stunden unter Rühren auf Temperaturen zwischen 30 bis 200°C hält und anschliessend abkühlt, filtriert und das nunmehr mit einem Polyisocyanurat mikroverkapselte Ammoniumpolyphosphat trocknet.

Im einzelnen besteht das Verfahren wahlweise darin, dass

a) man die Suspension aus Verdünnungsmittel und Ammoniumpolyphosphat vorlegt und dieser Suspension Lösungen des Polyisocyanates und anschliessend des Trimerisierungskatalysators in dem Verdünnungsmittel langsam zugibt;
b) in der allgemeinen Formel des Ammoniumpolyphosphates n eine ganze Zahl mit einem Durchschnittswert von 450 bis 800 ist;
c) als Verdünnungsmittel Lösemittel auf Basis aromatischer, aliphatischer oder cycloaliphatischer Kohlenwasserstoffe sowie aliphatischer, aromatischer und gemischtaliphatischer/aromatischer Ketone, vorzugsweise Aceton, eingesetzt werden;
d) als Polyisocyanat handelsübliche aromatische oder aliphatische Di- und Polyisocyanate, vorzugsweise technisches 4,4'-Diphenylmethandiisocyanat (MDI), eingesetzt werden;
e) als Beschleuniger für die Trimerisierungsreaktion handelsübliche Trimerisierungskatalysatoren, vorzugsweise 2,4,6-Tris(dimethylaminomethyl)phenol, eingesetzt werden;
f) in der Suspension ein Verhältnis von Ammoniumpolyphosphat:Verdünnungsmittel:Polyisocyanat:Trimerisierungskatalysator wie 1:1,5-2,5:0,05-0,25:0,00025-0,025, vorzugsweise wie 1:2:0,1:0,005, eingehalten wird;
g) die Reaktionszeit 1 bis 3 Stunden bei Temperaturen zwischen 50 bis 150°C beträgt;
h) die Trocknung bei Temperaturen zwischen 80 bis 150°C in Inertgasatmosphäre, vorzugsweise im Stickstoffstrom, erfolgt;
i) die erreichte mittlere Teilchengrösse des mikroverkapselten Ammoniumpolyphosphates als Flammschutzmittel zwischen 0,01 und 0,1 mm, vorzugsweise zwischen 0,03 und 0,06 mm, beträgt; und
k) der Anteil des Polyisocyanurats im Flammschutzmittel 2 bis etwa 15 Masse% beträgt.

Schliesslich betrifft die Erfindung auch die Verwendung des vorbeschriebenen Mittels zur flammwidrigen Einstellung von Polyurethanen bzw. Polyurethanschäumen, wobei der Gehalt des Mittels im Polyurethanschaum etwa 5 bis 25 Masse%, bezogen auf die Menge der Polyolkomponente des Polyurethans, beträgt.

Das Aufbringen der Polyisocyanurate auf die Ammoniumpolyphosphat-Teilchen kann in Lösungsmitteln auf Basis aromatischer, aliphatischer oder cycloaliphatischer Kohlenwasserstoffe oder in aliphatischen, aromatischen oder gemischtaliphatischen/aromatischen Ketonen unter Rühren der Ammoniumpolyphosphat/Polyisocyanat-Suspension erfolgen, wobei die katalysierte Trimerisationsreaktion unter Erwärmen durchgeführt wird.

Durch die erfindungsgemässe Umhüllung der Ammoniumpolyphosphat-Teilchen mit einem Polyisocyanurat wird die Löslichkeit des Ammoniumpolyphosphates in Wasser erheblich herabgesetzt, was sich günstig auswirkt, z.B. beim Einsatz eines derartig vorbehandelten Ammoniumpolyphosphates als Flammschutzmittel in Polyurethanschäumen.

Die Polyisocyanurate zeichnen sich als Beschichtungsmaterial für Ammoniumpolyphosphat gegenüber den bekannten Umhüllungsharzen Phenol/Formaldehyd-Harz und Epoxidharz durch eine höhere Verringerung der Wasserlöslichkeit und gegenüber den Melamin/Formaldehyd-Harzen und den Phenol/Formaldehyd-Harzen dadurch aus, dass sie keinen Formaldehyd freisetzen können.

Die erfindungsgemässen Mittel, deren Herstellung und Vorteile werden in den nachfolgenden Beispielen erläutert. Zur Durchführung der in den Beispielen dargelegten Versuche wurden im Handel erhältliche Ammoniumpolyphosphate sowie verschiedene, ebenfalls handelsübliche Polyisocyanate eingesetzt. Im einzelnen handelt es sich hierbei um folgende Produkte:

1. ®Exolit 422, Hoechst Aktiengesellschaft, Frankfurt/Main.
   Es handelt sich um ein feinkörniges, in Wasser schwer lösliches Ammoniumpolyphosphat, wobei der Kondensationsgrad n ~ 700 ist.
2. ®Caradate 30, Deutsche Shell Chemie GmbH, Frankfurt/Main.
   Es handelt sich um ein Gemisch verschiedener aromatischer Di- und Triisocyanate mit 4,4'-Diphenylmethandiisocyanat als Hauptkomponente. Das Produkt ist eine Flüssigkeit von tiefbrauner bis schwarzer Farbe. Der Isocyanatgehalt liegt bei 30,2% NCO. Die Dichte (bei 23°C) beträgt 1,22-1,24 g/ml, die Viskosität (bei 25°C) 160-240 mPa · s.
3. ®Desmodur T 80, Bayer Aktiengesellschaft, Leverkusen.
   Es handelt sich um ein Isomerengemisch eines aromatischen Diisocyanates mit 80 Masse% 2,4-Toluoldiisocyanat und 20 Masse% 2,6-Toluoldiisocyanat. Das Produkt ist eine farblose Flüssigkeit, der Isocyanatgehalt liegt bei etwa 48% NCO. Die Dichte (bei 25°C) beträgt ca. 1,2 g/ml.
4. Isophorondiisocyanat (3-Isocyanatomethyl-3,5,5-trimethylcyclohexylisocyanat), Chemische Werke Hüls Aktiengesellschaft, Marl.
   Es handelt sich um ein flüssiges, farbloses Produkt mit einem Isocyanatgehalt von 37,5-37,8% NCO. Die Dichte (bei 20°C) beträgt 1,058-1,064 g/ml, die Viskosität (bei 20°C) 15 mPa · s.

Beispiel 1

In einer Rührapparatur aus Glas wurden in 1000 ml Aceton 250 g ®Exolit 422 suspendiert; dann wurde eine Lösung von 15,0 g ®Caradate 30 in 100 ml Aceton eingetropft. Anschliessend wurde die Suspension zum schwachen Sieden erhitzt und tropfenweise mit einer Lösung von 0,3 g ®Dabco TMR (Trimerisierungskatalysator der Firma Katalysatorenwerke Houdry-Hüls GmbH, Marl) in 50 ml Aceton versetzt. Nach einer Nachrührzeit von 2 Stunden wurde auf Raumtemperatur abgekühlt und filtriert. Der erhaltene Filterkuchen wurde bei 100° C im Stickstoffstrom getrocknet.

Es wurden 252 g beschichtetes Ammoniumpolyphosphat mit einem Polisocyanuratanteil von 5,4 Masse% erhalten.

Zur Bestimmung der wasserlöslichen Anteile wurden 10 g des hergestellten Produktes in 100 ml Wasser suspendiert und die Suspension 20 min bei 25° C bzw. bei 60° C gerührt. Anschliessend wurde der im Wasser ungelöste Anteil des Produktes innerhalb von 40 Minuten durch Zentrifugieren sedimentiert. Von der überstehenden klaren Lösung wurden 5,0 ml in eine zuvor gewogene Aluminiumschale pipettiert und bei 120° C im Trockenschrank eigedampft. Aus der Menge des Verdampfungsrückstandes wurde der wasserlösliche Anteil berechnet. Das Ergebnis ist in Tabelle 1 dargestellt.

Beispiel 2

Es wurde analog Beispiel 1 verfahren, wobei jedoch eine Lösung von 30 g ® Caradate 30 in 100 ml Aceton eingesetzt wurde. Als Trimerisierungskatalysator wurden 0,6 g ® Dabco TMR, gelöst in 50 ml Aceton, eingetropft.

Es wurden 268 g beschichtetes Ammoniumpolyphosphat mit einem Polyisocyanuratanteil von 9,8 Masse% erhalten.

Die ermittelten Werte für die wasserlöslichen Anteile sind in Tabelle 1 aufgeführt.

Beispiel 3

Es wurde analog Beispiel 1 verfahren, wobei jedoch eine Lösung von 0,75 g ® Dabco TMR in 50 ml Aceton eingetropft wurde.

Es wurden 254 g beschichtetes Ammoniumpolyphosphat mit einem Polyisocyanuratanteil von 5,7 Masse% erhalten.

Die ermittelten Werte für die wasserlöslichen Anteile sind in Tabelle 1 aufgeführt.

Beispiel 4

Es wurde analog Beispiel 2 verfahren, wobei jedoch eine Lösung von 1,5 g ® Dabco TMR in 50 ml Aceton eingetropft wurde.

Es wurden 270 g beschichtetes Ammoniumpolyphosphat mit einem Polyisocyanuratanteil von 10,9 Masse% erhalten.

Die ermittelten Werte für die wasserlöslichen Anteile sind in Tabelle 1 aufgeführt.

Beispiel 5

In einer Rührapparatur aus Glas wurden 250 g ® Exolit 422 in 400 ml Xylol suspendiert; dann wurden eine Lösung von 25 g ® Desmodur T 80 in 100 ml Xylol und eine Lösung von 0,25 g ® DMP-30 [2,4,6-Tris(dimethylaminomethyl)phenol, Trimerisierungskatalysator der Firma Röhm und Haas GmbH, Frankfurt/Main] in 50 ml Xylol zugegeben. Anschliessend wurde die Suspension zum schwachen Sieden erhitzt. Nach einer Nachrührzeit von 2 Stunden wurde auf Raumtemperatur abgekühlt und filtriert. Der erhaltene Filterkuchen wurde bei 100°C im Stickstoffstrom getrocknet. Es wurden 267 g beschichtetes Ammoniumpolyphosphat mit einem Polyisocyanuratanteil von 6,8 Masse% erhalten.

Die ermittelten Werte für die wasserlöslichen Anteile sind in Tabelle 2 aufgeführt.

Beispiel 6

Es wurde analog Beispiel 5 verfahren, wobei jedoch eine Lösung von 1,25 g ® DMP-30 in 50 ml Xylol eingesetzt wurde. Es wurden 272 g beschichtetes Ammoniumpolyphosphat mit einem Polyisocyanuratanteil von 8,3 Masse% erhalten.

Die ermittelten Werte für die wasserlöslichen Anteile sind in Tabelle 2 aufgeführt.

Beispiel 7

Es wurde analog Beispiel 5 verfahren, wobei jedoch eine Lösung von 25 g Isophorondiisocyanat in 100 ml Xylol eingesetzt wurde. Es wurden 260 g beschichtetes Ammoniumpolyphosphat mit einem Polyisocyanuratanteil von 5,9 Masse% erhalten.

Die ermittelten Werte für die wasserlöslichen Anteile sind in Tabelle 2 aufgeführt.

Beispiel 8

Es wurde analog Beispiel 5 verfahren, wobei jedoch eine Lösung von 25 g Isophorondiisocyanat in 100 ml Xylol und eine Lösung von 1,25 ® DMP-30 in 50 ml Xylol eingesetzt wurden. Es wurden 275 g beschichtetes Ammoniumpolyphosphat mit einem Polyisocyanuratanteil von 7,7 Masse% erhalten.

Die ermittelten Werte für die wasserlöslichen Anteile sind in Tabelle 2 aufgeführt.

Beispiel 9

In einer Glasapparatur wurden 250 g ® Exolit 422 in 400 ml Aceton suspendiert; dann wurden eine Lösung von 25 g ® Caradate 30 in 100 ml Aceton und eine Lösung von 0,125 g ® DMP-30 [2,4,6-Tris(dimethylaminomethyl)phenol, Trimerisierungskatalysator der Firma Röhm und Haas GmbH, Frankfurt/Main] in 50 ml Aceton zugegeben. Anschliessend wurde die Suspension zum schwachen Sieden erhitzt und 3,5 Stunden bei dieser Temperatur belassen. Die weitere Aufarbeitung erfolgte analog Beispiel 5. Es wurden 251 g beschichtetes Ammoniumpolyphosphat mit einem Polyisocyanuratanteil von 3,9 Masse% erhalten.

Die ermittelten Werte für die wasserlöslichen Anteile sind in Tabelle 3 aufgeführt.

Beispiel 10

Es wurde analog Beispiel 9 verfahren, wobei jedoch eine Lösung von 0,25 g ® DMP-30 in 50 ml Aceton eingesetzt wurde. Es wurden 257 g beschichtetes Ammoniumpolyphosphat mit einem Polyisocyanuratanteil von 5,1 Masse% erhalten.

Die ermittelten Werte für die wasserlöslichen Anteile sind in Tabelle 3 aufgeführt.

Beispiel 11

Es wurde analog Beispiel 9 verfahren, wobei jedoch eine Lösung von 0,5 g ®DMP-30 in 50 ml Aceton eingesetzt wurde. Es wurden 254 g beschichtetes Ammoniumpolyphosphat mit einem Polyisocyanuratanteil von 6,5 Masse% erhalten.

Die ermittelten Werte für die wasserlöslichen Anteile sind in Tabelle 3 aufgeführt.

Beispiel 12

Es wurde analog Beispiel 9 verfahren, wobei jedoch eine Lösung von 1,25 g ®DMP-30 in 50 ml Aceton eingesetzt wurde. Es wurden 266 g beschichtetes Ammoniumpolyphosphat mit einem Polyisocyanuratanteil von 7,2 Masse% erhalten.

Die ermittelten Werte für die wasserlöslichen Anteile sind in Tabelle 3 aufgeführt.

Beispiel 13

Es wurde analog Beispiel 9 verfahren, wobei jedoch eine Lösung von 2,5 g ®DMP-30 in 50 ml Aceton eingesetzt wurde. Es wurden 268 g beschichtetes Ammoniumpolyphosphat mit einem Polyisocyanuratanteil von 9,2 Masse% erhalten.

Die ermittelten Werte für die wasserlöslichen Anteile sind in Tabelle 3 aufgeführt.

TABELLE 1

| Produkt | Gehalt an Polyisocyanurat (%) | Wasserlösliche Anteile (%) | | | |
|---|---|---|---|---|---|
| | | bei 25° C | Veränderung (%) | bei 60° C | Veränderung (%) |
| Beispiel 1 | 5,4 | 5,7 | −30 | 17,8 | −71 |
| Beispiel 2 | 9,8 | 3,1 | −62 | 9,3 | −85 |
| Beispiel 3 | 5,7 | 2,6 | −68 | 14,2 | −77 |
| Beispiel 4 | 10,9 | 1,8 | −78 | 5,6 | −91 |
| ® Exolit 422[1)] | — | 8,2 | — | 62 | — |

[1)] Zum Vergleich wurden die Werte für die unbeschichtete Handelsware (® Exolit 422, Hoechst Aktiengesellschaft, Frankfurt/Main) aufgeführt.

*Tabellen am Ende des Patents*

Die Werte aus Tabellen 1-3 lassen erkennen, dass mit Hilfe der erfindungsgemässen Modifizierungsmittel der Gehalt an wasserlöslichen Anteilen erheblich gesenkt werden kann (bei 25°C um bis zu 95%, bei 60°C um bis zu 97%).

## Patentansprüche

1. Flammschutzmittel auf der Basis von freifliessendem, pulverförmigem Ammoniumpolyphosphat der allgemeinen Formel

$$H_{(n-m)+2}(NH_4)_mP_nO_{3n+1}$$

in welcher n eine ganze Zahl mit einem Durchschnittswert von etwa 20 bis 800 bedeutet und das Verhältnis von m zu n etwa 1 beträgt, *dadurch gekennzeichnet*, dass es aus

a) etwa 75 bis 99,5 Masse% Ammoniumpolyphosphat und

b) etwa 0,5 bis 25 Masse% eines Reaktionsproduktes aus einem Polyisocyanat mit einem Trimerisierungskatalysator, wobei das Polyisocyanurat die einzelnen Ammoniumpolyphosphatteilchen umhüllt,

besteht.

2. Mittel nach Anspruch 1, *dadurch gekennzeichnet*, dass es eine mittlere Teilchengrösse von etwa 0,01 bis 0,1 mm besitzt.

3. Mittel nach Anspruch 1 oder 2, *dadurch gekennzeichnet*, dass n eine ganze Zahl mit einem Durchschnittswert von 450 bis 800 ist.

4. Mittel nach Anspruch 1-3, *dadurch gekennzeichnet*, dass der Anteil des Polyisocyanurats 2 bis etwa 15 Masse% beträgt.

5. Verfahren zur Herstellung eines Flammschutzmittels nach einem der vorhergehenden Ansprüche, *dadurch gekennzeichnet*, dass man eine Suspension, welche aus einem Verdünnungsmittel und aus freifliessendem, pulverförmigem Ammoniumpolyphosphat der allgemeinen Formel

$$H_{(n-m)+2}(NH_4)_mP_nO_{3n+1}$$

in welcher n eine ganze Zahl mit einem Durchschnittswert von etwa 20 bis 800 bedeutet und das Verhältnis von m zu n etwa 1 beträgt, sowie aus einem Polyisocyanat und aus einem Trimerisierungskatalysator besteht, während 0,5 bis 5 Stunden unter Rühren auf Temperaturen zwischen 30 bis 200°C hält und anschliessend abkühlt, filtriert und das nunmehr mit einem Polyisocyanurat mikroverkapselte Ammoniumpolyphosphat trocknet.

6. Verfahren nach Anspruch 6, *dadurch gekennzeichnet*, dass man die Suspension aus Verdünnungsmittel und Ammoniumpolyphosphat vorlegt und dieser Suspension Lösungen des Polyisocyanates und anschliessend des Trimerisierungskatalysators in dem Verdünnungsmittel langsam zugibt.

7. Verfahren nach einem der Ansprüche 6-7, *dadurch gekennzeichnet*, dass in der allgemeinen Formel des Ammoniumpolyphosphates n eine ganze Zahl mit einem Durchschnittswert von 450 bis 800 ist.

8. Verfahren nach einem der Ansprüche 6-8, *dadurch gekennzeichnet*, dass als Verdünnungsmittel Lösemittel auf Basis aromatischer, aliphatischer oder cycloaliphatischer Kohlenwasserstoffe sowie aliphatischer, aromatischer und gemischtaliphatischer/aromatischer Ketone, vorzugsweise Aceton, eingesetzt werden.

9. Verfahren nach einem der Ansprüche 6-9, *dadurch gekennzeichnet*, dass als Polyisocyanat handelsübliche aromatische oder aliphatische Di- und Polyisocyanate, vorzugsweise technisches 4,4'-Diphenylmethandiisocyanat (MDI), eingesetzt werden.

10. Verfahren nach einem der Ansprüche 6-10, *dadurch gekennzeichnet*, dass als Beschleuniger für die Trimerisierungsreaktion handelsübliche Trimerisierungskatalysatoren, vorzugsweise 2,4,6-Tris(dimethylaminomethyl)phenol, eingesetzt werden.

11. Verfahren nach einem der Ansprüche 6-11, *dadurch gekennzeichnet*, dass in der Suspension ein Verhältnis von Ammoniumpolyphosphat:Verdünnungsmittel:Polyisocyanat:Trimerisierungskatalysator wie 1:1,5-2,5:0,05-0,25:0,00025-0,025, vorzugsweise wie 1:2:0,1:0,005 eingehalten wird.

12. Verfahren nach einem der Ansprüche 6-12, *dadurch gekennzeichnet*, dass die Reaktionszeit 1 bis 3 Stunden bei Temperaturen zwischen 50 bis 150°C beträgt.

13. Verfahren nach einem der Ansprüche 6-13, *dadurch gekennzeichnet*, dass die Trocknung bei Temperaturen zwischen 80 bis 150°C in Inertgasatmosphäre, vorzugsweise im Stickstoffstrom, erfolgt.

14. Verfahren nach einem der Ansprüche 6-14, *dadurch gekennzeichnet*, dass die erreichte mittlere Teilchengrösse des mikroverkapselten Ammoniumpolyphosphates als Flammschutzmittel zwischen 0,01 und 0,1 mm, vorzugsweise zwischen 0,03 und 0,06 mm, beträgt.

15. Verfahren nach einem der Ansprüche 6-15, *dadurch gekennzeichnet*, dass der Anteil des Polyisocyanurats im Flammschutzmittel 2 bis etwa 15 Masse% beträgt.

16. Verwendung des Mittels nach Anspruch 1-5 und hergestellt nach dem Verfahren gemäss einem der Ansprüche 6-16 zur flammwidrigen Einstellung von Polyurethanen bzw. Polyurethanschäumen, wobei der Gehalt des Mittels im Polyurethanschaum etwa 5 bis 25 Masse%, bezogen auf die Menge der Polyolkomponente des Polyurethans, beträgt.

## Claims

1. Flame-retardant agent based on free flowing pulverulent ammonium polyphosphate of the general formula

$$H_{(n-m)+2}(NH_4)_mP_nO_{3n+1}$$

in which *n* stands for a whole number having an average value of about 20 to 800 and the ratio m/n is about 1, consisting of

a) about 75 to 99.5 wgt % ammonium polyphosphate and
b) about 0.5 to 25 wgt % of a reaction product of a polyisocyanate and a trimerization catalyst,

the polyisocyanurate encapsulating the individual ammonium polyphosphate particles.

2. Agent as claimed in claim 1 presenting a mean particle size of about 0.01 to 0.1 mm.

3. Agent as claimed in claim 1 or 2, wherein n stands for a whole number having an average value of 450 to 800.

4. Agent as claimed in any of claims 1-3, containing the polyisocyanurate in a proportion of 2 to about 15 wgt %.

5. Process for making a flame-retardant agent as claimed in any of the preceding claims which comprises: maintaining a suspension consisting of a diluent and free flowing pulverulent ammonium polyphosphate of the general formula

$$H_{(n-m)+2}(NH_4)_mP_nO_{3n+1}$$

in which *n* stands for a whole number, having an average value of about 20 to 800 and the ratio m/n is about 1, as well as of a polyisocyanate and a trimerization catalyst over a period of 0.5-5 hours while stirring at a temperature between 30 and 200°C and then cooling and filtering it, and drying the ammonium polyphosphate now microencapsulated in a polyisocyanurate.

6. Process as claimed in claim 5, wherein the suspension of diluent and ammonium polyphosphate is gradually admixed with solutions of the polyisocyanate and then of the trimerization catalyst in the diluent.

7. Process as claimed in claim 5 or 6, wherein in the general formula of the ammonium polyphosphate, *n* stands for a whole number having an average value of 450 to 800.

8. Process as claimed in any of claims 5-7, wherein the diluent is a solvent based on an aromatic, aliphatic or cycloaliphatic hydrocarbon or on an aliphatic, aromatic or mixed aliphatic/aromatic ketone, preferably acetone.

9. Process as claimed in any of claims 5-8, wherein the polyisocyanate is a commercially available aromatic or aliphatic di- or polyisocyanate, preferably commercial 4.4'-diphenylmethanediisocyanate (MDI).

10. Process as claimed in any of claims 5-9, wherein the agent accelerating the trimerization reaction is a commercially available trimerization catalyst, preferably 2,4,6-tris(dimethylaminomethyl)phenol.

11. Process as claimed in any of claims 5-10, wherein an ammonium polyphosphate/diluent/polyisocyanate/trimerization catalyst ratio of 1:1.5-2.5:0.05-0.25:0.00025-0.025, preferably 1:2:0.1:0.005, is maintained in the suspension.

12. Process as claimed in any of claims 5-11, wherein the reaction period is 1 to 3 hours at temperatures between 50 and 150°C.

13. Process as claimed in any of claims 5-12, wherein the drying is effected at temperatures between 80 and 150°C under inert gas, preferably in a stream of nitrogen.

14. Process as claimed in any of claims 5-13, wherein the mean particle size reached for the microencapsulated ammonium polyphosphate as the flame-retardant agent is between 0.01 and 0.1 mm, preferably between 0.03 and 0.06 mm.

15. Process as claimed in any of claims 5-14, wherein the flame-retardant agent contains the polyisocyanurate in a proportion of 2 to about 15 wgt %.

16. Use of the agent as claimed in any of claims 1-4 and prepared by the process as claimed in any of claims 5-15 for conferring flame-retardant properties upon polyurethanes or polyurethane foams, the polyurethane foam containing the agent in a proportion of about 5-25 wgt %, based on the quantity of the polyol component of the polyurethane.

**Revendications**

1. Agent ignifugeant à base de polyphosphate d'ammonium pulvérulent fluide de formule générale

$$H_{(n-m)+2}(NH_4)_mP_nO_{3n+1}$$

dans laquelle n représente un nombre entier d'une valeur moyenne d'environ 20 à 800 et le rapport m/n est d'environ 1, caractérisé en ce qu'il est constitué par

a) environ 75 à 99,5% en poids de polyphosphate d'ammonium et
b) environ 0,5 à 25% en poids d'un produit de réaction d'un polyisocyanate et d'un catalyseur de trimérisation, le polyisocyanurate enrobant les particules individuelles de polyphosphate d'ammonium.

2. Agent selon la revendication 1, caractérisé en ce qu'il présente une granulométrie moyenne d'environ 0,01 à 0,1 mm.

3. Agent selon la revendication 1 ou 2, caractérisé en ce que n est un nombre entier d'une valeur moyenne de 450 à 800.

4. Agent selon l'une des revendications 1 à 3, caractérisé en ce que la fraction de polyisocyanurate est de 2 à environ 15% en poids.

5. Procédé de préparation d'un agent ignifugeant selon l'une des revendications précédentes, caractérisé en ce que l'on maintient une suspension constituée par un diluant et un polyphosphate d'ammonium pulvérulent fluide de formule générale

$$H_{(n-m)+2}(NH_4)_mP_nO_{3n+1}$$

dans laquelle n représente un nombre entier d'une valeur moyenne d'environ 20 à 800 et le rapport m/n est d'environ 1, ainsi que par un polyisocyanate et un catalyseur de trimérisation pendant 0,5 à 5 h sous agitation à des températures comprises entre 30 et 200°C, et ensuite on la refroidit, on filtre et on sèche le polyphosphate d'ammonium dès lors micro-encapsulé dans un polyisocyanurate.

6. Procédé selon la revendication 5, caractérisé en ce que l'on charge initialement la suspension de diluant et de polyphosphate d'ammonium et on ajoute lentement à cette suspension des solutions du polyisocyanate et ensuite du catalyseur de trimérisation dans le diluant.

7. Procédé selon la revendication 5 ou 6, caractérisé en ce que, dans la formule générale du polyphosphate d'ammonium, n est un nombre entier d'une valeur moyenne de 450 à 800.

8. Procédé selon l'une des revendications 5 à 7, caractérisé en ce qu'on utilise comme diluants des solvants à base d'hydrocarbures aromatiques, aliphatiques ou cycloaliphatiques, ainsi qu'à base de cétones aliphatiques, aromatiques et mixtes aliphatiques/aromatiques, de préférence l'acétone.

9. Procédé selon l'une des revendications 5 à 8, caractérisé en ce qu'on utilise comme polyisocyanates des di- et polyisocyanates aromatiques ou aliphatiques du commerce, de préférence le diisocyanato-4,4',-diphénylméthane (DIM) du commerce.

10. Procédé selon l'une des revendications 5 à 9, caractérisé en ce qu'on utilise comme accélérateurs de la réaction de trimérisation des catalyseurs de trimérisation du commerce, de préférence le 2,4,6-tris-(diméthylaminométhyl)-phénol.

11. Procédé selon l'une des revendications 5 à 10, caractérisé en ce qu'on maintient dans la suspension une proportion polyphosphate d'ammonium/diluant/polyisocyanate/catalyseur de trimérisation de 1:1,5-2,5:0,05-0,25:0,00025-0,025, de préférence 1:2:0,1:0,005.

12. Procédé selon l'une des revendications 5 à 11, caractérisé en ce que la durée de réaction est de 1 à 3 h à des températures comprises entre 50 et 150°C.

13. Procédé selon l'une des revendications 5 à 12, caractérisé en ce que l'on effectue le séchage à des températures comprises entre 80 et 150°C en atmosphère de gaz inerte, de préférence dans un courant d'azote.

14. Procédé selon l'une des revendications 5 à 13, caractérisé en ce que le polyphosphate d'ammonium micro-encapsulé comme agent ignifugeant présente une granulométrie moyenne comprise entre 0,01 et 0,1 mm, de préférence entre 0,03 et 0,06 mm.

15. Procédé selon l'une des revendications 5 à 14, caractérisé en ce que la fraction de polyisocyanurate dans l'agent ignifugeant est de 2 à environ 15% en poids.

16. Utilisation de l'agent selon l'une des revendications 1 à 4 et préparé par le procédé selon l'une des revendications 5 à 15 pour l'ignifugation de polyuréthannes ou de mousses de polyuréthannes, la teneur de l'agent dans la mousse en polyuréthanne étant d'environ 5 à 25% en poids, rapportée à la quantité du composant polyol du polyuréthanne.

TABELLE 2

| Produkt | Polyisocyanat | Katalysator-Konzentration[2] (%) | Gehalt an Poly-isocyanurat (%) | Wasserlösliche Anteile (%) | | | |
|---|---|---|---|---|---|---|---|
| | | | | bei 25° C | Veränderung (%) | bei 60° C | Veränderung (%) |
| Beispiel 5 | ® Desmodur T 80 | 1 | 6,8 | 4,8 | −41 | 13,5 | −78 |
| Beispiel 6 | ® Desmodur T 80 | 5 | 8,3 | 2,3 | −72 | 8,2 | −87 |
| Beispiel 7 | Isophorondiisocyanat | 1 | 5,9 | 5,6 | −32 | 16,9 | −72 |
| Beispiel 8 | Isophorondiisocyanat | 5 | 7,7 | 3,9 | −52 | 10,6 | −83 |
| ® Exolit 422[1] | | | | 8,2 | — | 62 | — |

[1] Zum Vergleich wurden die Werte für die unbeschichtete Handelsware (® Exolit 422, Hoechst Aktiengesellschaft, Frankfurt/Main) aufgeführt.
[2] Diese Angaben beziehen sich auf das Verhältnis von Trimerisationskatalysator zur Menge an Polyisocyanat.

TABELLE 3

| Produkt | Katalysator-Konzentration[2] (%) | Gehalt an Poly-isocyanurat (%) | Wasserlösliche Anteile (%) | | | |
|---|---|---|---|---|---|---|
| | | | bei 25° C | Veränderung (%) | bei 60° C | Veränderung (%) |
| Beispiel 9 | 0,5 | 3,9 | 5,7 | −30 | 20,3 | −67 |
| Beispiel 10 | 1,0 | 5,1 | 4,3 | −48 | 12,7 | −79 |
| Beispiel 11 | 2,0 | 6,5 | 2,3 | −72 | 8,0 | −87 |
| Beispiel 12 | 5,0 | 7,2 | 1,7 | −79 | 3,2 | −95 |
| Beispiel 13 | 10,0 | 9,2 | 0,4 | −95 | 1,8 | −97 |
| ®Exolit 422[1] | | | 8,2 | — | 62 | — |

[1] Zum Vergleich wurden die Werte für die unbeschichtete Handelsware (® Exolit 422, Hoechst Aktiengesellschaft, Frankfurt/Main) aufgeführt.
[2] Diese Angaben beziehen sich auf das Verhältnis von Trimerisationskatalysator zur Menge an Polyisocyanat.